Europäisches Patentamt

European Patent Office

Office européen des brevets

(11) Veröffentlichungsnummer: **0 384 140**
**A1**

## EUROPÄISCHE PATENTANMELDUNG

(21) Anmeldenummer: 90101356.5

(22) Anmeldetag: 24.01.90

(51) Int. Cl.⁵: **D03D 27/10, D03D 11/00**

(30) Priorität: 01.02.89 DE 3902940

(43) Veröffentlichungstag der Anmeldung:
**29.08.90 Patentblatt 90/35**

(84) Benannte Vertragsstaaten:
**AT BE CH DE DK ES FR GB GR IT LI LU NL SE**

(71) Anmelder: **PARABEAM Industrie- en Handelsonderneming B.V.**
**Hoogeindsestraat 49**
**NL-5705 AL Helmond(NL)**

(72) Erfinder: **André de la Porte, Gilles**
**Pallandtlaan, Bar.V.5**
**Rozendaal(NL)**
Erfinder: **Van der Vleuten, Peter**
**Gezellestraat 3**
**NL-5421 PE Gemert(NL)**

(74) Vertreter: **Sparing - Röhl - Henseler**
**Patentanwälte**
**Rethelstrasse 123 Postfach 14 02 68**
**D-4000 Düsseldorf 1(DE)**

(54) **Doppelplüschgewebe.**

(57) Die Erfindung betrifft ein Doppelplüschgewebe (1) mit einem aus Kett- (4, 5) und Schußfäden (6, 7) bestehenden Ober- (2) und Untergewebe (3) sowie in Polbindung eingebundenen Polfäden (9), die das Ober- (2) und Untergewebe (3) verbinden. Zur Ausbildung eines Doppelplüschgewebes (1) mit hoher Festigkeit und Steifigkeit ist vorgesehen, daß die Kett- (4, 5) und Schußfäden (6, 7) jeweils durch eine Kettfadenflottungen aufweisende Grundbindung verkreuzt sind, und zusätzliche Deckschußfäden (10) außenseitig auf dem Ober- (2) und/oder Untergewebe (3) im wesentlichen gestreckt und flottend von den Kettfäden (4, 5) abgebunden sind, wobei benachbarte Deckschußfäden (10) von verschiedenen Kettfäden (4, 5) des jeweiligen Ober- (2) und Untergewebes (3) abgebunden sind.

FIG. 1

EP 0 384 140 A1

Die Erfindung betrifft ein Doppelplüschgewebe mit einem aus Kett- und Schußfäden bestehenden Ober- und Untergewebe sowie eingebundenen Polfäden, die das Ober- und Untergewebe verbinden.

Derartige Doppelplüschgewebe besitzen durch den florgefüllten Verbindungsraum zwischen Ober- und Untergewebe bei Beanspruchung eine bessere Reiß- und Zugfestigkeit als Flachgewebe. Von technisch verwendbaren Doppelplüschgeweben wird jedoch neben einer hohen Festigkeit auch eine hohe Steifigkeit mit nur einer gewissen Biegbarkeit verlangt, die bei örtlichen Spannungskonzentrationen für Spannungsumlagerungen ohne örtliche Brüche sorgt. Durch den Einsatz hochfester Fasern konnten Gewebe mit hoher Festigkeit und Steifigkeit erzielt werden, die auf Grund ihres günstigeren Festigkeits/Gewichtsverhältnisses korrosionsempfindliche Verstärkungsmaterialien, wie z.B. Stahl, ersetzen können. Die hochfesten Fasern sind jedoch nicht problemlos verwendbar, da sie einerseits teuer sind und zum anderen wegen ihrer niedrigen Bruchdehnung im allgemeinen nur einen Teil der Fasern des Gewebes stellen.

Aufgabe der Erfindung ist es daher, ein Doppelplüschgewebe nach dem Oberbegriff des Anspruchs 1 zu schaffen, das neben einer hohen Festigkeit auch eine hohe Steifigkeit aufweist.

Diese Aufgabe wird gemäß dem kennzeichnenden Teil des Anspruchs 1 dadurch gelöst, daß die Kett- und Schußfäden vorzugsweise jeweils durch eine Kettfadenflottungen aufweisende Grundbindung verkreuzt sind, und zusätzliche Deckschußfäden außenseitig auf dem Ober- und/oder Untergewebe im wesentlichen gestreckt und flottend von den Kettfäden abgebunden sind, wobei benachbarte Deckschußfäden von verschiedenen Kettfäden abgebunden sind.

Hierdurch wird ein Doppelplüschgewebe geschaffen, das durch Bindung, Einstellung und Zahl der das Gewebe aufbauenden Fäden die für unaufgeschnittene Doppelplüschgewebe existierenden guten mechanischen Eigenschaften mit einer hohen Steifigkeit verknüpft. Eine Änderung der physikalischen Eigenschaften eines Gewebes kann somit über eine spezielle Ausgestaltung der Gewebestruktur erreicht werden. Dabei kann durch ein-oder zweiseitige Anordnung der Deckschußfäden und Auswahl des Fasermaterials das Eigenschaftsprofil des Doppelplüschgewebes noch weiter modifiziert werden. So kann vorgesehen sein, daß die Deckschußfäden als Monofilamente ausgebildet sind, die gegenüber Multifilamenten weniger flexibel sind und/oder die Deckschußfäden aus hochfesten Fasern, wie z.B. Kohlenstoff, Glas, Aramid usw., bestehen.

Das Abbinden der Deckschußfäden durch eine Grundbindung mit Kettflottungen erlaubt einen gleichmäßigen Gewebeaufbau, da die Zahl der Fadenkreuzungen gegenüber einer Tuchbindung niedriger gehalten ist, wodurch freies Volumen für die Deckschußfäden bereitgestellt wird. Für eine derartige Grundbindung können die Kettfäden und Schußfäden einen Querrips bilden. Die zusätzlichen Deckschußfäden können durch eine Atlasbindung abgebunden sein, die die Deckschußfäden über zerstreut im Gewebe angeordnete Bindungspunkte gestreckt einwebt. Dabei kann jeweils ein Deckschuß alle zwei Schußfäden des jeweiligen Ober- oder Untergewebes abgebunden sein, vorzugsweise jeweils alle 2 bis 8 Schußfäden.

Erfolgt die Abbindung des Deckschußfadens allein außenseitig auf dem Obergewebe, so kann das Untergewebe mit den Deckschußfäden gegenüberliegenden Leerschüssen gewebt sein, wodurch das Untergewebe eine lockere Einstellung erhält, die das durch die Deckschußfäden beanspruchte Volumen für einen unverzerrten Gewebeaufbau ausgleicht.

Die Polfäden können durch eine V- oder W-Bindung eingelegt sein. Vorzugsweise sind die Polfäden in einer 2/4 Schuß Polaufbindung eingelegt. Eine gleichmäßige Spannungsumlagerung kann zudem durch ein versetztes Einbinden benachbarter Polfäden in Schußrichtung erreicht werden. Vorzugsweise handelt es sich bei dem Doppelplüschgewebe um einen unaufgeschnittenen Velours, bei dem die Polfäden von dem Obergewebe zum Untergewebe und umgekehrt wechseln, und zwar nachdem sie in Kettrichtung entlang eines oder mehrerer Schußfäden eingewebt wurden. Die Länge der Polfäden kann zwischen 0,1 und 50 mm variieren. Das Obergewebe und Untergewebe können somit im wesentlichen aufeinanderliegend oder mit Abstand zueinander mittels der Polfäden aneinander geheftet sein. Die Dichte der Polfäden kann ebenfalls variieren zwischen sehr dicht und weniger dicht und liegt vorzugsweise zwischen 3 Millionen Polfäden/m$^2$ und 0,1 Millionen Polfäden/m$^2$. Vorzugsweise ist die Zunahme der Länge der Polfäden mit einer Zunahme der Dichte der Polfäden pro m$^2$ verbunden.

Für das aus Schuß- und Kettfäden bestehende Ober- und Untergewebe sowie die Polfäden können wie für die Deckschußfäden natürliche, synthetische oder gemischte Fasern verwendet werden, wie z.B. Baumwolle, Polyester, Polyacrylnitril, Polyamid, oder hochfeste Fasern, wie z.B. aus Glas, Bor, Stahl, Kohlenstoff. Die eingesetzten Fasern können dabei entweder als Stapelfasern zu Garnen versponnen sein oder als Mono- und/oder Multifilamente ausgebildet sein. Für die Polfäden kann es vorteilhaft sein, Monofilamente zu verwenden, wodurch die Sprungkraft des Gewebes wesentlich verbessert wird.

Je nach Größe und Richtung der zu erwartenden Beanspruchungen kann das Ober- und Untergewebe aus gleichen oder verschiedenen Fasern bestehen. Beispielsweise können die Kettfäden aus Polyester bestehen und die Schußfäden aus Aramid. Demgegenüber können einerseits die Polfäden und andererseits die Deckschußfäden auch aus Polyester oder Aramid oder einer anderen Faserart bestehen.

Desweiteren kann das Doppelplüschgewebe die Verstärkungskomponente eines Verbund- und Hybridwerkstoffes mit einer aushärtbaren Polymermatrix bilden. Hierdurch wird ein Verbund- und Hybridwerkstoff geschaffen, der unter äußeren Lasten wie Biegung, Querkraft und -torsion zu einer verminderten Rißbildung neigt, da die Polfäden für eine Spannungsableitung von dem Obergewebe zum Untergewebe oder umgekehrt sorgen, und bedingt durch die Gewebestruktur eine hohe Quersteifigkeit aufweist. Die Anpassung des Eigenschaftsprofils an Beanspruchungssituationen kann folglich über eine Modifizierung des Gewebes mit Deckschüssen und/oder Wahl des Fasermaterials erfolgen. Die Aufteilung der Last zwischen Gewebe und Polymermatrix hängt auch vom Volumengehalt der Komponenten ab. Hinsichtlich dieses Volumengehalts hat sich ein Gewichtsverhältnis von Gewebe zu Kunststoff von 50:50 als vorteilhaft herausgestellt. Der Volumengehalt des Gewebes kann geändert und angepaßt werden durch einerseits Wahl der Dichte der Polfäden und Deckschußfäden und andererseits Einbau mehrerer Lagen des Doppelplüschgewebes in das Laminat. Dabei können Deckschußfäden aufweisende Doppelplüschgewebe mit Doppelplüschgeweben ohne Deckschußfäden in Lagen übereinander kombiniert werden.

Als Matrix-Kunststoffe sind unter anderem verwendbar bei den Thermoplasten Polyamide, Polypropylen, Polybutylen- und Polyethylenterephtal, Polyacetal, ABS und Polycarbonat; bei den Elastomeren Kautschuk und Polyurethane; bei den duromeren Reaktionsharzen die ungesättigten Polyester (UP-Harze), Epoxide und Vinylester.

Schließlich kann der Verbund- und Hybridwerkstoff mit einer wasserabweichenden Beschichtung ausgestattet sein, die insbesondere bei Einsatz im Schiffsbau von Bedeutung ist. Diese Beschichtung kann aus Silikonkautschuk oder Polyurethan bestehen.

Weitere Ausgestaltungen der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.

Fig. 1 und 1a zeigen einen Teilbereich eines Gewebeschnitts senkrecht zur Schußrichtung gemäß einem ersten Ausführungsbeispiel des Doppelplüschgewebes,

Fig. 2 und 2a zeigen einen Teilbereich eines Gewebeschnitts senkrecht zur Schußrichtung gemäß einem zweiten Ausführungsbeispiel des Doppelplüschgewebes,

Fig. 3 zeigt einen Teilbereich eines Gewebeschnitts senkrecht zur Schußrichtung gemäß einem dritten Ausführungsbeispiel des Doppelplüschgewebes,

Fig. 4a und 4b zeigen den Fadenverlauf senkrecht zur Schußrichtung im Doppelplüschgewebe gemäß einem vierten Ausführungsbeispiel,

Fig. 5a und 5b zeigen einen Teilbereich eines Schnitts eines ersten und zweiten Ausführungsbeispiels eines Verbund- und Hybridwerkstoffes.

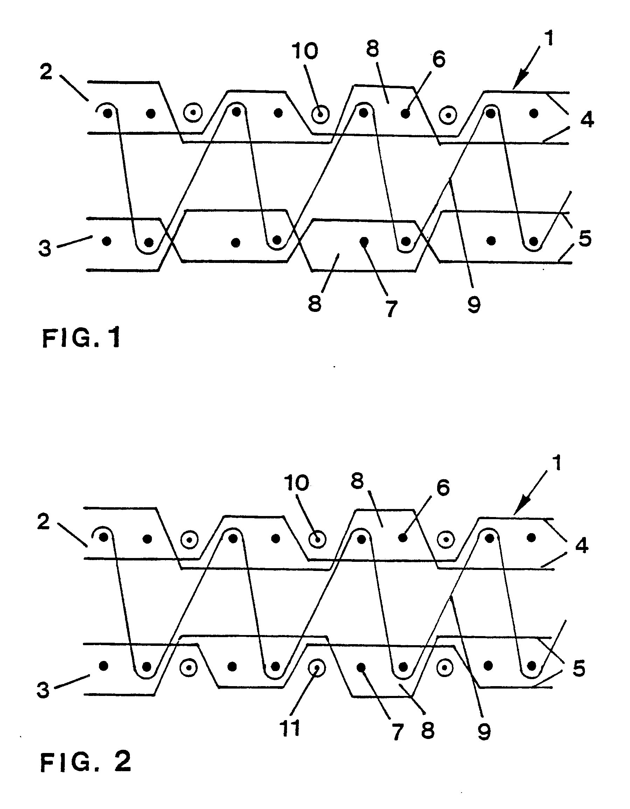

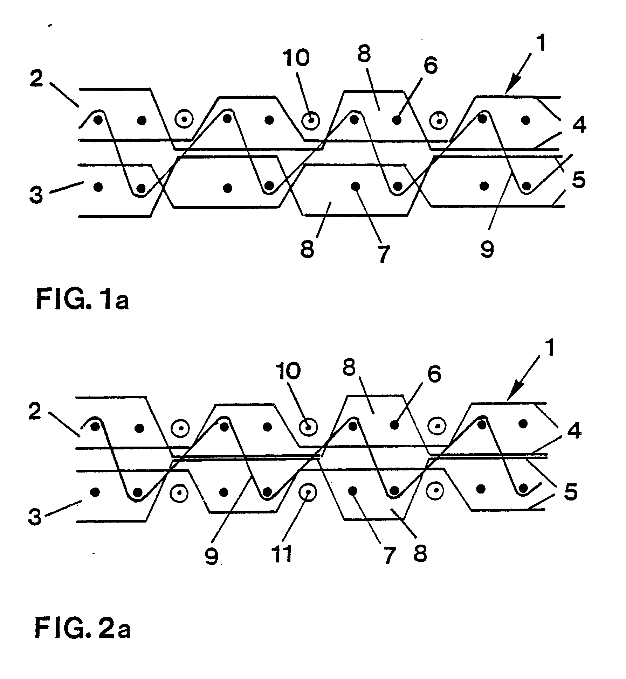

Figur 1 und 1a zeigen ein erstes Ausführungsbeispiel eines unaufgeschnittenen Doppelplüschgewebes bzw. Doppelpolgewebes 1 mit einem Obergewebe 2 und einem Untergewebe 3. Das Obergewebe 2 besteht aus Kettfäden 4 und das Untergewebe 3 aus Kettfäden 5, die jeweils mit Schußfäden 6 bzw. 7 verkreuzt sind. Die Verkreuzungsweise ist von einer Leinwandbindung abgeleitet, indem in dasselbe Leinwandfach 8 immer mehrere Schüsse eingetragen sind, wodurch Kettfadenflottungen entstehen. Hier sind in ein Leinwandfach 8 jeweils zwei Schußfäden 6 bzw. 7 eingetragen. Die Zahl der eintragbaren Schußfäden kann bis zu acht Schußfäden 6 bzw. 7 betragen und liegt vorzugsweise bei zwei bis vier Schußfäden. Zwischen dem Obergewebe 2 und dem Untergewebe 3 wechseln Polfäden 9 unter Einbindung in Kettrichtung und Umschlingen jeweils eines Schußfadens 6, 7 hin und her. Die Einbindung der Polfäden 9 erfolgt durch eine V-Bindung, vorzugsweise eine 2/4 Schuß Polaufbindung. Die Polfäden 9 können jedoch auch durch eine 3/6W oder 3/8W Schuß Poldurchbindung eingelegt sein. Die Zahl der Polfäden 9 pro m² sowie die Länge der Polfäden 9 kann an das zu erzielende Gewebegewicht und/oder die gewünschte Stützwirkung durch die Polfäden 9 angepaßt werden. Gegenüber der in Fig. 1 dargestellten Einbindung der Polfäden 9 können zusätzliche, die Polfäden 9 kreuzende Polfäden vorgesehen sein, wodurch eine noch dichtere Anordnung der Polfäden erzielt werden kann. Darüberhinaus sind in Schußrichtung benachbart zueinander angeordnete Polfäden 9 an verschiedenen Schußfäden 6 und damit versetzt zueinander angeordnet.

Die Länge der Polfäden 9 kann zwischen 0,1 und 50 mm variieren. Sind wie in Fig. 1 dargestellt, die Oberware 2 und die Unterware 3 mit Abstand zueinander verankert, so beträgt die Länge der Polfäden 9 im allgemeinen 1 bis 50 mm, vorzugsweise 1,5 bis 15 mm (hier 4 bis 6 mm). Ein Abstand zwischen Ober- und Unterware wird insbesondere bei Glasgeweben eingestellt, da hierdurch die Verformbarkeit für Spannungsumlagerungen verbessert wird. Gemäß Fig. 1a können die Oberware 2 und die Unterware 3 aber auch aufeinanderliegend durch die Polfäden 9 miteinander verbunden sein. Die Dichte der Polfäden 9 beträgt etwa 1,5 Millionen Polfäden/m² und liegt vorzugsweise zwischen 3 Millionen Polfäden/m² und 0,1 Millionen Polfäden/m².

Auf der Außenseite des Obergewebes 2 sind weiterhin zusätzliche Deckschußfäden 10 angeordnet. Diese Deckschußfäden 10 sind jeweils zwischen zwei Leinwandfächern 8 flottend angeordnet und durch die Kettfäden 4 einzeln abgebunden. Für eine im wesentlichen gestreckte Anordnung der Deckschußfäden 10 auf der Außenseite des Obergewebes 2 flottieren die einzelnen Deckschußfäden 10 über mehrere Kettfäden, vorzugsweise zwei bis sechs. Als Verkreuzungsweise von Kettäden 4 und Deckschußfäden 10 dienen demnach solche Bindungen, bei denen im Gegensatz zur Köperbindung nicht immer schon der nächstliegende Kettfaden mit dem nächstliegenden Schußfaden bindet. Die hier für die Abbindung der Deckschußfäden 10 benutzte Grundbindung ist eine Atlasbindung. Die Steigerungszahlen liegen vorzugsweise zwischen zwei und sieben. Bei der Atlasbindung sind die Bindungspunkte zerstreut im Gewebe, hier dem Obergewebe 2, angeordnet, wodurch die Anbindungspunkte gleichmäßig auf der Außenseite verteilt sind. Die Zahl, Garnstärke und Faserart der auf der Außenseite abgebundenen Deckschußfäden 10 hängt ab von der in Quer- und Längsrichtung gewünschten Steifigkeit. Neben einer Anordnung der Deckfäden 10 aller zwei Schußfäden 6 können die Deckschußfäden 10 auch aller drei bis acht Schußfäden 6 angeordnet sein.

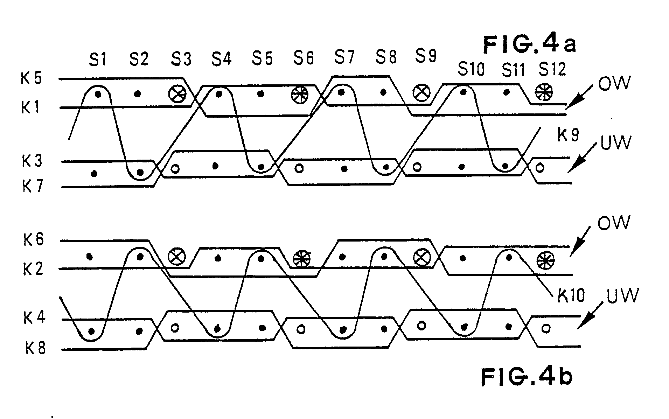

Weitere Einzelheiten zur Bindung und Fadenverlauf des Doppelplüschgewebes sind detailliert für ein viertes Ausführungsbeispiel anhand der Figuren 4a und 4b beschrieben.

Die Garnstärke für die Deckschußfäden 10 liegt im Bereich zwischen 10 und 200 tex. Als Fasermaterial dienen synthetische Fasern, wie z. B. Polyester, Polypropylen, Polyacrylnitril, Polamid, die als Stapelfasern, Multifilamente oder Monofilamente zu Garnen verarbeitet sein können. Insbesondere Monofilamente mit der ihnen innewohnenden hohen Sprungkraft sind für die Deckschußfäden 10 besonders geeignet. Aber auch hochfeste Fasern aus Glas, Bor, Kohlenstoff, Aramid usw. eignen sich als Fasermaterial für die Deckschußfäden 10, die wegen ihrer guten mechanischen Eigenschaften die durch den Gewebeaufbau erreichte Steifigkeit, insbesondere Quersteifigkeit, noch unterstützend verbessern.

Als Fasermaterial für die Garne der Kettfäden 4, 5 und der Schußfäden 6, 7 des Ober- und Untergewebes 2, 3 sowie für die Polfäden 9 können natürliche und synthetische Fasern als auch Mischfasern verwendet werden. Die wichtigste natürliche Faser ist Baumwolle, die insbesondere bei einer Kunstoffbeschichtung oder Gummierung des Doppelplüschgewebes für eine gute Anhaftung sorgt. Zu den einsetzbaren synthetischen Fasern zählen unter anderem Polyester, Polypropylen, Polyacrylnitril, Polyamid. Desweiteren sind die hochfesten Fasern aus Glas, Bornitrid, Aramid, Kohlenstoff usw. einsetzbar. Die synthetischen und hochfesten Fasern sind im allgemeinen als Stapelfasern oder Multifilamente ausgebildet. Die demgegenüber dicken Monofilamentgarne sind ebenfalls zum Weben des Ober- und Untergewebes 2, 3 geeignet, werden allerdings vorzugsweise nur für die Polfäden 9 und/oder wie vorstehend ausgeführt für die Deckschußfäden 10 verwendet.

Bei dem dargestellten ersten Ausführungsbeispiel bestehen die Kettfäden 4, 5 und die Schußfäden 6, 7 sowie die Polfäden 9 aus der gleichen synthetischen Faser, wie z.B Polyester, oder der gleichen hoch festen Faser, wie z.B. Aramid, während die Deckschußfäden 10 aus einer anderen besonders festen Faser, wie z.B. der Kohlefaser, bestehen können. Existiert eine starke Beanspruchung des Gewebes 1 in nur einer Richtung, z.B. der Kettrichtung oder Schußrichtung, so können neben den Deckschußfäden 10 auch noch die Kettfäden 4, 5 oder die Schußfäden 6, 7 aus der besonders festen Faser, wie z. B der Kohlefaser, bestehen. Aus Kostengründen werden häufig auch Glasfasern verwebt, die sich mit herkömmlichen synthetischen Fasern oder anderen hochfesten Fasern in dem Doppelplüschgewebe 1 kombinieren lassen. Schließlich kann für die vier verschiedenen Fäden 4, 5; 6, 7; 9; 10 vier Verschiedene Faserarten zum Aufbau des Doppelplüschgewebes 1 eingesetzt werden.

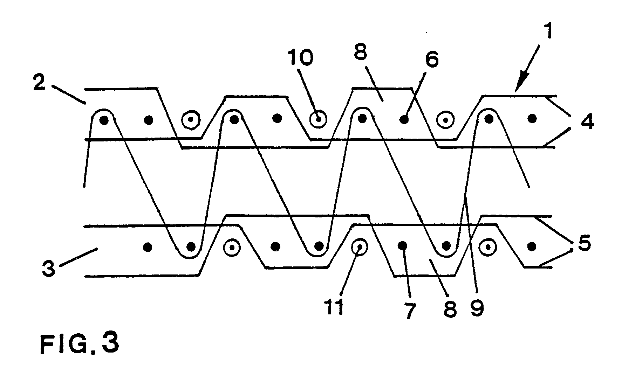

Figur 2, 2a und Figur 3 zeigen ein zweites und drittes Ausführungsbeispiel des Doppelplüschgewebes, die sich von dem ersten Ausführungsbeispiel nur dadurch unterscheiden, daß das Untergewebe 3 auch an seiner Außenseite Deckschußfäden 11 abbindet. Während das erste Ausführungsbeispiel ein Doppelplüschgewebe 1 mit einem einseitigen Deckschuß 10 betrifft, beziehen sich das zweite und dritte Ausführungsbeispiel auf Doppelplüschgewebe 1 mit einem zweiseitigen Deckschuß 10, 11. Die Deckschußfäden 11 des Untergewebes 3 sind einzeln durch die Kettfäden 5 abgebunden, wobei die Abbindung entsprechend der Abbindung der Deckschußfäden 10 durch die Kettfäden 4 entspricht. Die Ausführungen zu den Deckschußfäden 10 gelten somit auch für die Deckschußfäden 11. Gemäß Figur 2 sind die Deckschußfäden 10 des Obergewebes 2 und die Deckschußfäden 11 des Untergewebes 3 gegenüberliegend zueinander angeordnet, also jeweils zwischen den gleichen Leinwandfächern 8 angeordnet. Der florgefüllte Raum bildet folglich eine Symmetrieebene senkrecht zur Schnittebene.

Bei dem dritten Ausführungsbeispiel gemäß Figur 3 sind die Deckschußfäden 10 des Obergewebes 2 und die Deckschußfäden 11 des Untergewebes 3 versetzt zueinander abgebunden, indem die Leinwandfächer von Obergewebe 2 und Untergeweber 3 durch Kreuzung der Kettfäden 4, 5 jeweils um einen Schußfaden 6, 7 in Kettrichtung versetzt sind.

Das in den Figuren 4a und 4b dargestellte Doppelplüschgewebe umfaßt ein Obergewebe 2, nachfolgend OW (Oberware) bezeichnet und eine Untergewebe 3, nachfolgend UW (Unterware) genannt, die jeweils von einer Grundkette 4, 5 mit den Kettfäden K1, K2, K5, K6 bzw. K3, K4, K7, K8 sowie einer Schußkette 6, 7 mit Schußfäden S1 bis S12 gebildet werden. Obergewebe OW und Untergewebe UW werden miteinander durch eine Polkette 9 mit den Polfäden K9 und K10 verbunden, die in einer V-Bindung eingewebt sind.

Obergewebe OW und Untergewebe UW bilden jeweils einen Querrips mit einem Schußrapport von 12 und einem Kettrapport von 6.

Der Schußeintrag erfolgt in der Weise, daß sowohl für das Obergewebe OW als auch für das Untergewebe UW jeweils zwei Grundschußfäden S1, S2; S4, S5; S7, S8 und S10, S11 eingetragen werden. Jeder dritte Schußfaden S3, S6, S9 und S12 ist in dem Obergewebe Ow ein Sonderschußfaden, der sogenannte Deckschußfaden. In dem Obergewebe OW sind zwei verschiedene Deckschußfäden abgebunden, und zwar einerseits die Schußfäden S3 und S9 und andererseits die Deckschußfäden S6 und S12. Die Deckschußfäden S3, S6, S9 und S12 bilden zusammen einen zwölfbindigen Schußatlas mit Sprungzahl 3. Dementsprechend bilden die Deckschußfäden S3, S6, S9 und S12 Flottungen, die sich jeweils über drei Kettfäden hinweg erstrecken, wenn man die Polkettfäden K9 und K10 außer Betracht läßt.

In dem Untergewebe UW werden durch die Grundkettfäden K3, K4, K7 und K8 jeweils Gruppen von drei aufeinanderfolgende Schüssen S3 - S5, S6 - S8, S9 - S11, S12 - S2 abgebunden, wobei die S3, S6, S9 und S12 Leerschüsse sind, die jeweils unter den Deckschußfäden S3, S6, S9, S12 des Obergewebes OW liegen.

Anstelle der Leerschüsse S3, S6, S9, S12 des Untergewebes UW könnten auch Sonderfüllschüsse vorgesehen sein, die dann glatt innerhalb der Grundkette des Untergewebes UW liegen würden, vgl. Fig. 4a und 4b. Demgegenüber werden die Deckschußfäden S3, S6, S9, S12 des Obergewebes OW entsprechend dem genannten Atlas abgebunden und liegen daher bis auf die versetzten Abbindungspunkte an der außenseitigen Oberfläche des Obergewebes OW.

Die Polkettfäden K9 und K10 binden jeweils mit den Grundschußfäden S1, S2, S4, S5, S7, S8, S10 und S11 ab, und zwar abwechselnd mit denen aus Ober- und Untergewebe OW und UW, wobei K9 und K10 um einen Grundschußfaden versetzt abbinden.

Das Doppelplüschgewebe wird mit zehn Schäften gewebt, die in zwei Schaftgruppen Sch1 und Sch2 aufgeteilt sind. Die erste Schaftgruppe Sch 1 nimmt die Kettfäden K1, K3, K5, K7 und K9 und die zweite Schaftgruppe Sch 2 die übrigen Kettfäden K2, K4, K6, K8 und K10 auf.

Der Fadenverlauf von Fig. 4a gehört zu den zu einem ersten Rietstich zusammengefaßten ersten fünf Kettfäden, während der Fadenverlauf von Fig. 4b zu einem zweiten Rietstich mit den weiteren fünf Kettfäden gehört.

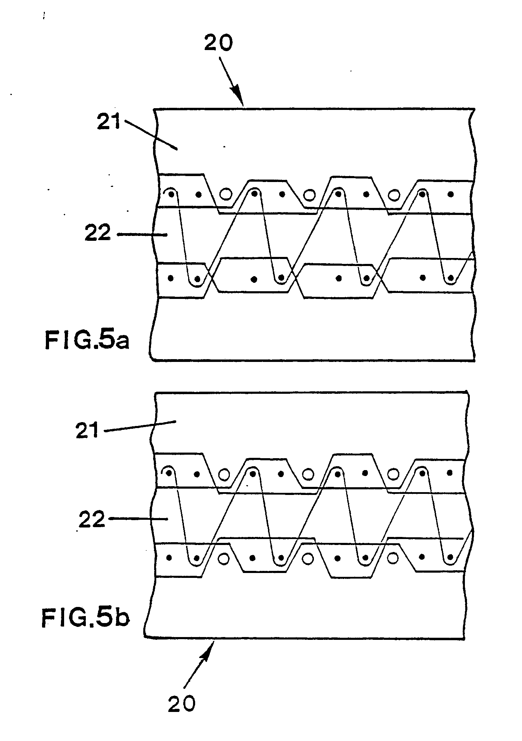

Die Figuren 5a und 5b zeigen ein erstes und zweites Ausführungsbeispiel eines Laminats 20 eines Verbund- und Hybridwerkstoffes mit einer Polymermatrix 21, bei dem das Verstärkungsgewebe 22 aus einem der vorstehend beschriebenen Doppelplüschgeweben besteht. Das Verstärkungsgewebe 22 ist in die aushärtbare Polmermatrix eingebettet.

Kunststoffe für die Polymermatrix sind Thermoplaste wie Polyamide, Polypropylen, Polybutylen- und Polyethylenterephtal, Polyacetal, Acryl-Butadien-Styrol-Copolymerisate (ABS) und Polycarbonat; Elastomere wie Kautschuk und Polyurethan; sowie duromere Reaktionsharze wie die ungesättigten Polyester (UP-Harze), Epoxide und Vinylester. Dazu kommt die große Anzahl der härtbaren Formmassen auf Basis Pheno- und Aminoplast.

Figur 5a zeigt ein Laminat 20 mit einer Gewebelage 22 aus einem Doppelplüschgewebe gemäß Fig. 1, während Figur 5b ein Laminat mit einem Doppelplüschgewebe gemäß Fig. 2 zeigt. Demgegenüber können in einem Laminat 20 auch mehrere Verstärkungsgewebe 22 in Form eines Doppelplüschgewebes mit ein- oder zweiseitigem Deckschuß in Lagen übereinander kombiniert sein, wobei Ober- und Untergewebe des Verstärkungsgewebes 22 mit oder ohne Abstand zueinander aneinander gebunden sein können. Schließlich kann diese Kombination auch Doppelplüschgewebe ohne Deckschuß und Veloursgewebe umfassen.

Für eine wasserabstoßende Ausbildung des Laminats 20 kann dieses noch mit einer Beschichtung aus z.B. Silikonkautschuk vorgesehen sein.

## Ansprüche

1. Doppelplüschgewebe mit einem aus Kett- und Schußfäden bestehenden Ober- und Untergewebe sowie eingebundenen Polfäden, die das Ober- und Untergewebe verbinden, dadurch gekennzeichnet, daß die Kett- und Schußfäden (4, 5; 6, 7) jeweils vorzugsweise durch eine Kettfadenflottungen aufweisende Grundbindung verkreuzt sind, und zusätzliche Deckschußfäden (10, 11) außenseitig auf dem Ober- und/oder Untergewebe (2, 3) im wesentlichen gestreckt und flottend von den Kettfäden (4, 5) abgebunden sind, wobei benachbarte Deckschußfäden (10, 11) von verschiedenen Kettfäden (4, 5) des jeweiligen Ober- oder Untergewebes (2, 3) abgebunden sind.

2. Doppelplüschgewebe nach Anspruch 1, dadurch gekennzeichnet, daß die Kettfäden (4, 5) und Schußfäden (6, 7) jeweils einen Querrips bilden und die zusätzlichen Deckschußfäden (10, 11) durch eine Atlasbindung abgebunden sind.

3. Doppelplüschgewebe nach Anspruch 1 oder 2, dadurch gekennzeichnet, daß bei Abbindung des Deckschusses (10) allein auf dem Obergewebe (2) das Untergewebe (3) mit den Deckschüssen (10) gegenüberliegenden Leerschüssen gewebt ist.

4. Doppelplüschgewebe nach Anspruch 3, dadurch gekennzeichnet, daß die Polfäden (9) in einer 2/4 Schuß Polaufbindung eingelegt sind.

5. Doppelplüschgewebe nach einem der Ansprüche 1 bis 4, dadurch gekennzeichnet, daß in Schußrichtung benachbarte Polfäden (9) versetzt eingebunden sind.

6. Doppelplüschgewebe nach einem der Ansprüche 1 bis 5, dadurch gekennzeichnet, daß Kett-, Schuß-, Pol- und Deckschußfäden (4, 5; 6, 7; 9; 10, 11) aus synthetischen Fasern bestehen.

7. Doppelplüschgewebe nach einem der Ansprüche 1 bis 6, dadurch gekennzeichnet, daß die Kett- und Schußfäden (4, 5; 6, 7) von Multifilamenten und die zusätzlichen Deckschüsse von Monofilamenten gebildet werden.

8. Doppelplüschgewebe nach einem der Ansprüche 1 bis 7, dadurch gekennzeichnet, daß die synthetischen Fasern aus Polyester, Polyamid oder Polypropylen bestehen.

9. Doppelplüschgewebe nach einem der Ansprüche 1 bis 7, dadurch gekennzeichnet, daß die zusätzlichen Deckschußfäden (10, 11) aus hochfesten Fasern bestehen.

10. Doppelplüschgewebe nach Anspruch 9, dadurch gekennzeichnet, daß die hochfesten Fasern aus Aramid, Kohle, Glas bestehen.

11. Doppelplüschgewebe nach einem der Ansprüche 1 bis 10, dadurch gekennzeichnet, daß das Ober- und Untergewebe (2, 3) mit oder ohne Abstand zueinander aneinander gebunden sind, wobei die Länge der Polfäden (9) zwischen 0,1 und 50 mm liegt.

12. Doppelplüschgewebe nach einem der Ansprüche 1 bis 11, dadurch gekennzeichnet, daß die Dichte der Polfäden (9) zwischen 3 Millionen Polfäden/m$^2$ und 0,1 Millionen Polfäden/m$^2$ liegt.

13. Verbund- und Hybridwerkstoff, bestehend aus einer erhärtbaren Polymermatrix (21) und einer Verstärkungskomponente (22) in Form eines Doppelplüschgewebes (1) nach einem der Ansprüche 1 bis 12.

14. Doppelplüschgewebe nach Anspruch 13, dadurch gekennzeichnet, daß zur Bildung eines Florfüllraumes die Polfäden (9) im wesentlichen senkrecht stehend zum Ober- und Untergewebe angeordnet sind.

15. Verbund- und Hybridwerkstoff nach Anspruch 13 oder 14, dadurch gekennzeichnet, daß das Ober-,Untergewebe und die Polfäden aus hochfesten Fasern bestehen.

16. Verbund- und Hybridwerstoff nach einem der Ansprüche 13 bis 15, dadurch gekennzeichnet, daß die Kett-, Schuß-, Deckschuß- und Polfäden aus verschiedenen hochfesten Fasern bestehen.

17. Verbund- und Hybridwerkstoff nach einem der Ansprüche 13 bis 16, dadurch gekennzeichnet, daß die Polfäden Monofilamente sind.

18. Verbund- und Hybridwerkstoff nach einem der Ansprüche 13 bis 17, dadurch gekennzeichnet, daß als Polymermatrix (21) Thermoplaste, Elastomere oder ungesättigte Polyester vorgesehen sind.

19. Verbund- und Hybridwerkstoff nach einem der Ansprüche 13 bis 18, dadurch gekennzeichnet, daß mehrere Doppelplüschgewebe (1) in die Polymermatrix (21) eingebettet sind.

20. Verbund- und Hybridwerkstoff nach einem der Ansprüche 13 bis 19, dadurch gekennzeichnet, daß der Florfüllraum vollständig von der Polymermatrix ausgefüllt ist.

21. Verbund- und Hybridwerkstoff nach einem der Ansprüche 13 bis 19, dadurch gekennzeichnet, daß die einzelnen Polfäden mit Abstand und unter Einschluß von Freiräumen in die Polymermatrix (21) eingebettet sind.

FIG. 1

FIG. 2

FIG. 1a

FIG. 2a

FIG. 3

FIG.4a

FIG.4b

FIG.5a

FIG.5b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A, P | FR-A-2624140 (BOUTON-RENAUD) <br> * das ganze Dokument * <br> --- | 1 | D03D27/10 <br> D03D11/00 |
| A | US-A-2329739 (BAKER) <br> ----- | | |
| | | | **RECHERCHIERTE SACHGEBIETE (Int. Cl.5 )** |
| | | | D03D |

Der vorliegende Recherchenbericht wurde für alle Patentansprüche erstellt

| Recherchenort | Abschlußdatum der Recherche | Prüfer |
|---|---|---|
| DEN HAAG | 18 MAI 1990 | BOUTELEGIER C.H.H. |